# EUROPEAN PATENT APPLICATION

(11) **EP 4 723 082 A1**
(43) Date of publication of application: **08.04.2026**
(21) Application number: 23939140.2
(22) Date of filing: 08.08.2023
(51) Int. Cl.: G09F 9/00, G02B 6/00

(54) **BACKLIGHT MODULE AND DISPLAY APPARATUS**

(30) Priority: 01.06.2023 CN 202310642784
(71) Applicant: Ways Electron Co., Ltd., Suzhou, Jiangsu 215300 (CN)
(72) Inventor: YAMAGUCHI, Masaru, Suzhou, Jiangsu 215300 (CN); MIMURA, Tomoya, Suzhou, Jiangsu 215300 (CN)
(74) Representative: Metida
(86) International application number: PCT/CN2023/111738
(87) International publication number: WO 2024/244160

(57) **Abstract**

Disclosed are a backlight device and a display device. The backlight device includes a first backlight device, a second backlight device and a privacy film. The first backlight device includes a substrate, a first light source and a composite brightness enhancement film. The substrate is made of a light-transmitting material and has a light-incident surface A and a light-emitting surface A. The first light source is arranged adjacent to the light-incident surface A, and the composite brightness enhancement film is provided on the light-emitting surface A. The second backlight device includes a first light guide plate and a second light source. The first light guide plate has a light-incident surface B, and a light guide surface B and a light-emitting surface B which are disposed back-to-back and both adjacent to the light-incident surface B. The second light source is arranged adjacent to the light-incident surface B.

## Description

### TECHNICAL FIELD

The present invention relates to the field of electro-optic display technology, and in particular, to a backlight device with a switchable viewing angle, and a display device manufactured by applying the backlight device.

### BACKGROUND

With the advancement of technology, electronic apparatuses equipped with display screens (e.g., a mobile phone, a tablet, a laptop, and an automotive display) have become indispensable items in modern life. However, requirements of people for viewing angles of display devices vary in different usage occasions. For example, when a user wants to share information with others, the display device is required to have a wide viewing angle, thereby allowing the others to see the displayed scene content from different angles. Conversely, when the user processes confidential information, the display device is required to have a narrow viewing angle, such that the displayed scene content is turned only visible to himself and not to others.

To meet the above-mentioned requirements, a type of display is provided in the industry, which incorporates a grating layer into a backlight device, serving to block light at wide front-back viewing angles, thereby providing a certain privacy protection effect. However, on one hand, the manufacturing process of the above-mentioned grating layer is complex, increasing machining costs. On the other hand, the privacy protection effect of the above-mentioned grating layer is generally not satisfactory and fails to adequately meet market demands.

**In** view of this, the present invention is specifically provided.

### SUMMARY

To overcome the above-mentioned defects, the present invention provides a backlight device and a display device. On one hand, the backlight device can provide both a privacy operating state and a sharing operating state for the display device, has a good privacy protection effect, and is beneficial for protecting user privacy. On the other hand, the backlight device is novel and reasonable in structure, easy to manufacture, and low in manufacture costs, thereby facilitating machining and production implementing.

To solve the technical problems, the present invention adopts the technical solutions: a backlight device includes a first backlight device, a second backlight device and a privacy film, wherein
the first backlight device includes a substrate, a first light source and a composite brightness enhancement film, the substrate is made of a light-transmitting material and has a light-incident surface A and a light-emitting surface A, the first light source is arranged adjacent to the light-incident surface A, and the composite brightness enhancement film is provided on the light-emitting surface A and is configured to diffuse and collimate light;
the second backlight device includes a first light guide plate and a second light source, the first light guide plate has a light-incident surface B, and a light guide surface B and a light-emitting surface B which are disposed back-to-back and both adjacent to the light-incident surface B, and the second light source is arranged adjacent to the light-incident surface B; and
the privacy film is arranged between a light-emitting side of the composite brightness enhancement film and the light guide surface B, and the privacy film is configured to cooperate with the first backlight device and the second backlight device to provide the backlight device with a privacy operating state and a sharing operating state.

As a further improvement of the present invention, when the first light source is turned on and the second light source is turned off, light emitted from the first light source sequentially passes through the substrate, the composite brightness enhancement film, the privacy film, and the first light guide plate and then is emitted in a forward direction, thereby achieving the privacy operating state of the backlight device; and
when both the first light source and the second light source are turned on, the light emitted from the first light source sequentially passes through the substrate, the composite brightness enhancement film, the privacy film, and the first light guide plate and then is emitted in the forward direction, and light emitted from the second light source passes through the first light guide plate and then is emitted in a dispersed manner, thereby achieving the sharing operating state of the backlight device.

As a further improvement of the present invention, the substrate, the composite brightness enhancement film, the privacy film, and the first light guide plate are sequentially stacked along a first direction; and
the privacy film includes a light-transmitting portion made of the light-transmitting material and a light-shielding portion made of a light-shielding material. The light-shielding portion is provided on the light-transmitting portion, and the light-shielding portion cooperates with the light-transmitting portion to collimate light passing through the privacy film in the first direction.

As a further improvement of the present invention, the light-transmitting portion is plate-shaped; the light-shielding portion is composed of a plurality of light-shielding strips, the plurality of light-shielding strips are all elongated structures having a thickness direction arranged along the first direction and a length direction arranged along a second direction perpendicular to the first direction, and the plurality of light-shielding strips are arranged side by side along a third direction, and the third direction is perpendicular to both the first direction and the second direction; and
further, defining a side of the light-transmitting portion facing the composite brightness enhancement film as a front side, and defining a side of the light-transmitting portion facing the first light guide plate as a rear side; and the plurality of light-shielding strips are embedded in one selected from the front side and the rear side of the light-transmitting portion, or the plurality of light-shielding strips are arranged on one selected from the front side and the rear side of the light-transmitting portion.

As a further improvement of the present invention, the light-transmitting portion has a thickness of 0.2 mm to 0.5 mm in the first direction; and
the plurality of light-shielding strips are embedded in the front side of the light-transmitting portion, a cross-section of each of the plurality of light-shielding strips in the first direction is an isosceles triangle, and each isosceles triangle cross-section has a base length of 0.03 mm to 0.05 mm, a height of 0.1 mm to 0.15 mm, and an apex angle of 1° to 20°; and a spacing between adjacent ones of the light-shielding strips is 0.04 mm to 0.095 mm.

As a further improvement of the present invention, the light-transmitting portion has a thickness of 0.2 mm to 0.5 mm in the first direction; and
the plurality of light-shielding strips are arranged on the rear side of the light-transmitting portion, a cross-section of each of the plurality of light-shielding strips in the first direction is a rectangle, wherein each rectangular cross-section has a width dimension of 0.03 mm to 0.05 mm and a length dimension of 0.1 mm to 0.15 mm; or a cross-section of each of the plurality of light-shielding strips (310) in the first direction is an isosceles triangle, wherein each isosceles triangle cross-section has a base length of 0.03 mm to 0.05 mm, a height of 0.1 mm to 0.15 mm, and an apex angle of 1° to 20°; and a spacing between adjacent ones of the light-shielding strips is 0.04 mm to 0.095 mm.

As a further improvement of the present invention, the light guide surface B is provided with a plurality of mutually independent optical elements, each of the plurality of optical elements is in an irregular quadrangular pyramid shape, wherein each of the plurality of optical elements has a light-refracting inclined surface, an auxiliary surface A and two auxiliary surfaces B, each of which adjoins the light-refracting inclined surface along a shared edge, where the light-refracting inclined surface is arranged opposite to the second light source and is further inclined relative to the light guide surface B, and at least one edge of the light-refracting inclined surface is a ridge line extending along an arc; and
a lens unit is provided on the light-emitting surface B, the lens unit is composed of a plurality of first prism strips, the plurality of first prism strips are all elongated structures extending along the second direction, a cross-section of each of the plurality of first prism strips in the first direction is arc-shaped, and the plurality of first prism strips are arranged side by side along the third direction.

As a further improvement of the present invention, in each of the plurality of optical elements, the light-refracting inclined surface is trapezoidal, two legs of the light-refracting inclined surface are arcuate and mirror-symmetrically arranged, and a top base and a bottom base of the light-refracting inclined surface are both straight; the auxiliary surface A is an isosceles trapezoid, with a top base, a bottom base, and two non-parallel sides being all straight, and the top base of the auxiliary surface A is connected with the top base of the light-refracting inclined surface along a shared edge; and the two auxiliary surfaces B are both triangular, first edges of the two auxiliary surfaces B are correspondingly connected with the two legs of the light-refracting inclined surface along shared edges, second edges of the two auxiliary surfaces B are correspondingly connected with the two non-parallel sides of the auxiliary surface A along shared edges, third edges of the two auxiliary surfaces B, the bottom base of the light-refracting inclined surface, and the bottom base of the auxiliary surface A are all attached and fixedly connected to the light guide surface B.
further, in each of the plurality of optical elements, lengths of the third edges of the two auxiliary surfaces B, the bottom base of the light-refracting inclined surface, and the bottom base of the auxiliary surface A are all 0.03 mm to 0.1 mm; central angles corresponding to the two legs of the light-refracting inclined surface are 20° to 60°; included angles between chords corresponding to the two legs of the light-refracting inclined surface and the third edges of the two auxiliary surfaces B are 25° to 45°; included angles between the two non-parallel sides of the auxiliary surface A and the bottom base are 30°to 80°; and included angles between the second edges and the corresponding third edges of the two auxiliary surfaces B are 10° to 30°;
further, among the plurality of first prism strips, a chord length of each arcuate cross-section is 0.03 mm to 0.06 mm, and a corresponding central angle is 40°to 100°.

As a further improvement of the present invention, each of the plurality of optical elements is correspondingly projected onto the light-shielding portion.

As a further improvement of the present invention, the substrate is a light guide plate; correspondingly, the light-incident surface A is adjacent to the light-emitting surface A, and the substrate further has a light guide surface A which is adjacent to the light-incident surface A and is arranged back-to-back with the light-emitting surface A; and
further, the light-incident surface A is perpendicular to the light-incident surface B, and the light guide surface A, the light-emitting surface A, the light guide surface B, and the light-emitting surface B are arranged in parallel in the first direction.

As a further improvement of the present invention, the composite brightness enhancement film includes a diffusion film, a first prism film, and a second prism film, which are sequentially stacked in the first direction, and one side of the diffusion film facing away from the first prism film is fixedly arranged on the light-emitting surface A; the first prism film is provided with a plurality of second prism strips, the second prism film is provided with a plurality of third prism strips, and the plurality of second prism strips all extend lengthwise along the second direction, and are arranged side by side along the third direction; the plurality of third prism strips all extend lengthwise along the third direction, and are arranged side by side along the second direction; and the plurality of second prism strips and the plurality of third prism strips are oppositely arranged.

As a further improvement of the present invention, a side of the composite brightness enhancement film facing away from the light-emitting surface A is the light-emitting side of the composite brightness enhancement film;
the first backlight device also includes a reflective film and a polarizer, the reflective film is fixedly arranged on the light guide surface A, the polarizer is fixedly arranged on the light-emitting side of the composite brightness enhancement film, and correspondingly, the privacy film is arranged between one side of the polarizer facing away the composite brightness enhancement film and the light guide surface B; and
further, at least one of the light-emitting surface A and the light guide surface A is further provided with a light guide microstructure, and the light guide microstructure includes a plurality of array-arranged spherical protrusions.

The present invention further provides a display device, including a display panel and the backlight device described in the present invention. The display panel is provided on the backlight device.

The present invention has the beneficial effects: 1) The backlight device provided in the present invention may be applied to the display device and provide the privacy operating state and the sharing operating state for the display device, and especially in the privacy operating state, a light-emitting angle of the backlight device satisfies: a full width at half maximum value in a vertical direction is ±10° to 30°, and a full width at half maximum value in a horizontal direction is ±10° to 20°, thereby achieving a good privacy protection effect, which is conducive to protecting the user privacy and avoiding disturbing others. Further specifically, when the backlight device is applied to an automotive display and the backlight device is in the sharing operating state, content on a display screen can be seen at both a driver seat and a front passenger seat, and when the backlight device is in the privacy operating state, the content on the display screen can be seen only at the front passenger seat, which is not only conducive to protecting the passenger privacy but also prevents a driver from seeing the content on the display screen, thereby avoiding driver distraction and improving driving safety. 2) The backlight device is novel and reasonable in structure, easy to manufacture, and low in manufacture costs, thereby facilitating machining and production implementing.

### BRIEF DESCRIPTION OF THE DRAWINGS

Fig. 1 is a schematic structural diagram of a backlight device according to the present invention.
Fig. 2 is a schematic diagram of a side-view structure of the backlight device according to the present invention from a first viewing angle.
Fig. 3 is a schematic structural diagram of an A-A section of the backlight device shown in Fig. 2.
Fig. 4 is a schematic diagram of an enlarged structure of a part P shown in Fig. 3.
Fig. 5 is a schematic diagram of an enlarged structure of a part Q shown in Fig. 3.
Fig. 6 is a schematic structural diagram (partial enlarged view) of a section of the backlight device according to the present invention from a second viewing angle.
Fig. 7 is a schematic structural diagram of a section of a first implementation structure of a privacy film according to the present invention along a first direction.
Fig. 8 is a schematic structural diagram of a section of a second implementation structure of the privacy film according to the present invention in the first direction.
Fig. 9 is a schematic structural diagram of a first light guide plate according to the present invention.
Fig. 10 is a schematic diagram of a positional relationship among a light-incident surface B, a light guide surface B, and a light-emitting surface B on the first light guide plate shown in Fig. 9.
Fig. 11 is a schematic diagram of an enlarged structure of a part M shown in Fig. 9.
Fig. 12 is a schematic structural diagram of optical elements shown in Fig. 11.
Fig. 13 is a schematic diagram of a top-view structure of the optical element shown in Fig. 12.
Fig. 14 is a schematic diagram of a side-view structure of the optical element shown in Fig. 12 from the first viewing angle.
Fig. 15 is a schematic diagram of a side-view structure of the optical element shown in Fig. 12 from the second viewing angle.
Fig. 16 is a schematic structural diagram of a section of first prism strips on the first light guide plate shown in Fig. 9 in the first direction.
Fig. 17 is a schematic structural diagram of a substrate according to the present invention.

### Reference numerals in the drawings:

1. First backlight device; 10. Substrate; 100. Light. Incident surface a; 101. Light. Emitting surface a; 102. Light guide surface a; 11. First light source; 12. Diffusion film; 13. First prism film; 14. Second prism film; 15. Reflective film; 16. Polarizer; 2. Second backlight device; 20. First light guide plate; 200. Light. Incident surface b; 201. Light guide surface b; 202. Light. Emitting surface b; 203. Optical element; 2030. Light. Refracting inclined surface; 2031. Auxiliary surface a; 2032. Auxiliary surface b; 204. First prism strip; 21. Second light source; 3. Privacy film; 30. Light. Transmitting portion; 31. Light. Shielding portion; 310. Light. Shielding strip; 4. Outer frame; and 5. Sheet metal member.

### DETAILED DESCRIPTION OF THE EMBODIMENTS

The following provides a detailed description of preferred embodiments of the present invention with reference to the accompanying drawings.

### Embodiment 1:

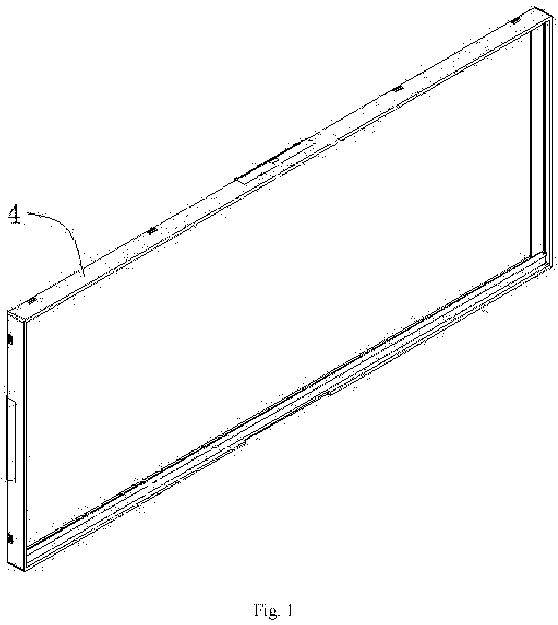

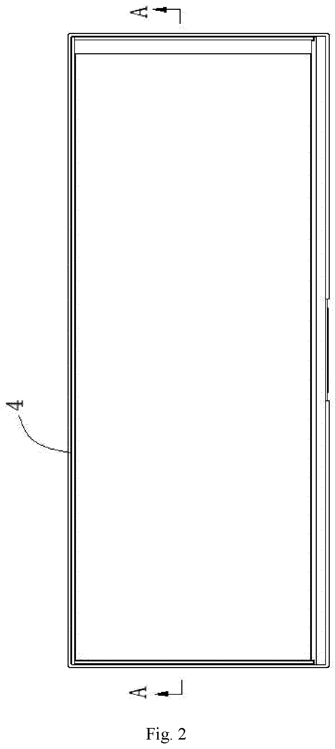

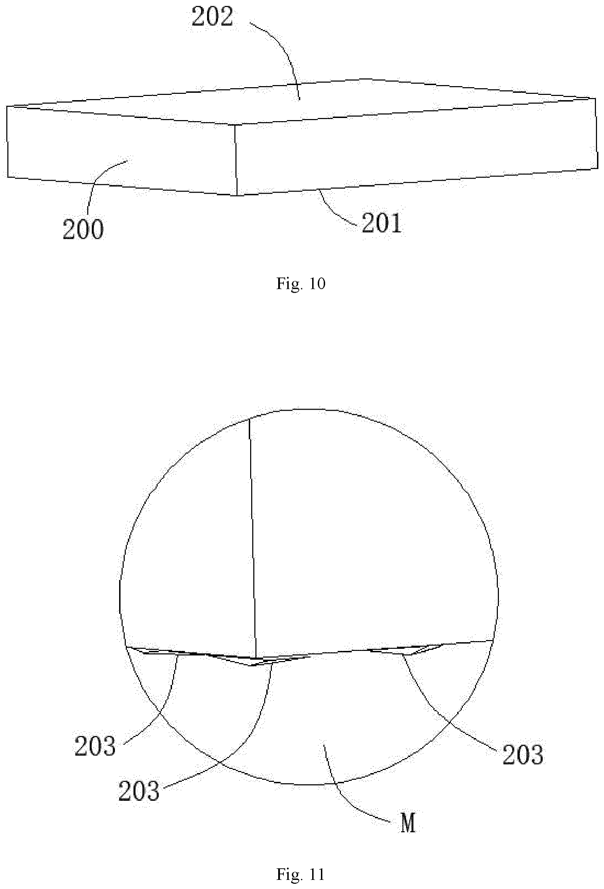

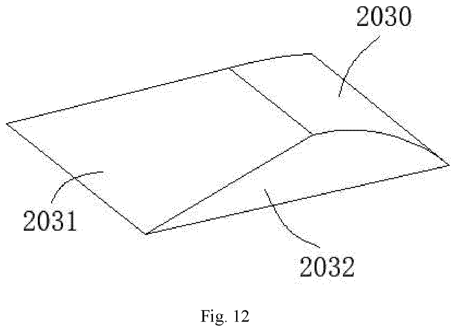

Embodiment 1 provides a backlight device, with a specific structure shown in Fig. 1 to Fig. 7 and Fig. 9 to Fig. 17 for reference.

The backlight device according to Embodiment 1 mainly includes a first backlight device 1, a second backlight device 2 and a privacy film 3. The first backlight device 1 includes a substrate 10, a first light source 11 and a composite brightness enhancement film. The substrate 10 is made of a light-transmitting material and has a light-incident surface A 100 and a light-emitting surface A 101. The first light source 11 is arranged adjacent to the light-incident surface A 100, and the composite brightness enhancement film is provided on the light-emitting surface A 101 and is configured to diffuse and collimate light, thereby improving luminous brightness. The second backlight device 2 includes a first light guide plate 20 and a second light source 21. The first light guide plate 20 has a light-incident surface B 200, and a light guide surface B 201 and a light-emitting surface B 202 which are disposed back-to-back and both adjacent to the light-incident surface B 200. The second light source 21 is arranged adjacent to the light-incident surface B 200. The privacy film 3 is arranged between a light-emitting side of the composite brightness enhancement film and the light guide surface B 201, and the privacy film 3 is configured to cooperate with the first backlight device 1 and the second backlight device 2 to provide the backlight device with a privacy operating state and a sharing operating state.

Specifically, when the first light source 11 is turned on and the second light source 21 is turned off, light emitted from the first light source 11 sequentially passes through the substrate 10, the composite brightness enhancement film, the privacy film 3, and the first light guide plate 20 and then is emitted in a forward direction, thereby achieving the privacy operating state of the backlight device. When both the first light source 11 and the second light source 21 are turned on, the light emitted from the first light source 11 sequentially passes through the substrate 10, the composite brightness enhancement film, the privacy film 3, and the first light guide plate 20 and then is emitted in the forward direction, and light emitted from the second light source 21 passes through the first light guide plate 20 and then is emitted in a dispersed manner, thereby achieving the sharing operating state of the backlight device.

From the above, it can be inferred that the backlight device provided in the present invention may be applied to a display device and provide the privacy operating state and the sharing operating state for the display device. Especially in the privacy operating state, a light-emitting angle of the backlight device satisfies: a full width at half maximum value in a vertical direction is ±10° to 30°, and a full width at half maximum value in a horizontal direction is ±10° to 20°, thereby achieving a good privacy protection effect, which is conducive to protecting the user privacy and avoiding disturbing others. Further specifically, when the backlight device is applied to an automotive display and the backlight device is in the sharing operating state, content on a display screen can be seen at both a driver seat and a front passenger seat, and when the backlight device is in the privacy operating state, the content on the display screen can be seen only at the front passenger seat, which is not only conducive to protecting the passenger privacy but also prevents a driver from seeing the content on the display screen, thereby avoiding driver distraction and improving driving safety.

Specific structures of the first backlight device 1, the second backlight device 2, and the privacy film 3 in the backlight device according to Embodiment 1 are respectively described in detail below.

First, the specific structure of the privacy film 3 is described in detail.

In Embodiment 1, the privacy film 3 includes a light-transmitting portion 30 made of the light-transmitting material and a light-shielding portion 31 made of a light-shielding material. The light-shielding portion 31 is provided on the light-transmitting portion 30, and the light-shielding portion 31 cooperates with the light-transmitting portion 30 to collimate light passing through the privacy film 3 in the first direction. It should be further understood that: after the light penetrates through the privacy film 3, a divergence degree of the light decreases, and a collimation degree in the first direction increases. That is, the privacy film 3 may form a collimated backlight device together with the first backlight device 1.

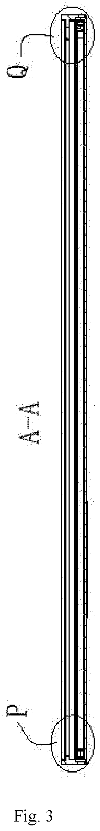

Additionally, the above-mentioned "first direction" is described: referring to Fig. 3 to Fig. 6, in Embodiment 1, the substrate 10, the composite brightness enhancement film, the privacy film 3, and the first light guide plate 20 are sequentially stacked, and a stacked arrangement direction is defined as the first direction. Further specifically, based on a use state where the backlight device is installed in front of the front passenger seat of an automobile, the first direction is a front-back direction. Correspondingly, the above-mentioned "forward light exit" may be further understood as forward light exit in the first direction.

Further preferably, regarding the material selection of the light-transmitting portion 30 and the light-shielding portion 31, Embodiment 1 is preferred as below: the light-transmitting portion 30 is made of a transparent material with a light transmittance of 80% to 95%, such as a transparent polyethylene terephthalate (PET) material or a transparent polycarbonate (PC) material; and the light-shielding portion 31 is made of a black material with a light concealment rate (or referred to as a light-shielding rate) of 80% to 100%, such as a black polymethyl methacrylate (PMMA) material or a black PC material.

Further preferably, regarding specific structures/shapes and a connection and combination relationship of the light-transmitting portion 30 and the light-shielding portion 31, Embodiment 1 is preferred as below: the light-transmitting portion 30 is plate-shaped; the light-shielding portion 31 is composed of a plurality of light-shielding strips 310, the plurality of light-shielding strips 310 are all elongated structures having a thickness direction arranged along the first direction and a length direction arranged along a second direction perpendicular to the first direction, and the plurality of light-shielding strips 310 are arranged side by side along a third direction, and the third direction is perpendicular to both the first direction and the second direction (note: based on the use state where the backlight device is installed in front of the front passenger seat of the automobile, the second direction may be understood as an up-down direction, and the third direction may be understood as a left-right direction). Further, defining a side of the light-transmitting portion 30 facing the composite brightness enhancement film as a front side, and defining a side of the light-transmitting portion 30 facing the first light guide plate 20 as a rear side. The plurality of light-shielding strips 310 are embedded in one selected from the front side and the rear side of the light-transmitting portion 30.

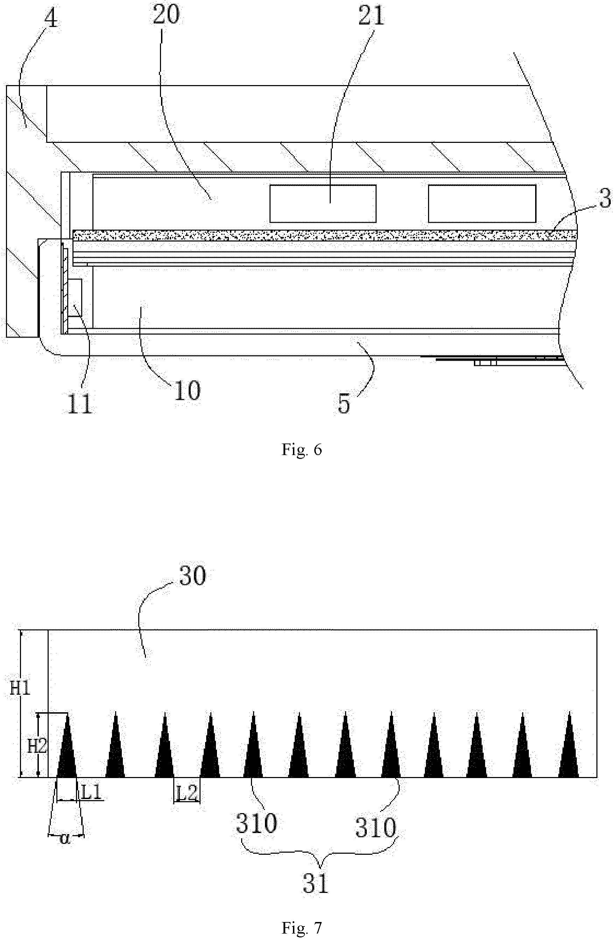

More preferably, referring to Fig. 7, the light-transmitting portion 30 has a thickness H1 of 0.2 mm to 0.5 mm in the first direction; the plurality of light-shielding strips 310 are embedded in the front side of the light-transmitting portion 30, and a cross-section of each of the plurality of light-shielding strips 310 in the first direction is an isosceles triangle, and each isosceles triangle cross-section has a base length L1 of 0.03 mm to 0.05 mm, a height H2 of 0.1 mm to 0.15 mm, and an apex angle α of 1° to 20°; and a spacing L2 between adjacent ones of the light-shielding strips 310 is 0.04 mm to 0.095 mm (the spacing L2 is further explained that the spacing L2 refers to a spacing between bases of the isosceles triangle cross sections of the two adjacent light-shielding strips 310).

From the above, it can be inferred that in a structure of the privacy film 3 shown in Embodiment 1, the plurality of light-shielding strips 310 are all arranged in the light-transmitting portion 30, and one side of each light-shielding strip 310 in the thickness direction is flush with the front side of the light-transmitting portion 30, and the other side of each light-shielding strip 310 in the thickness direction does not extend to the rear side of the light-transmitting portion 30. In addition, two ends of each light-shielding strip 310 in the length direction are also flush with two sides of the light-transmitting portion 30 in the second direction respectively. Further, the privacy film 3 is fixedly arranged between the light-emitting side of the composite brightness enhancement film and the light guide surface B 201 through the light-transmitting portion 30.

Then, the specific structure of the second backlight device 2 is described in detail.

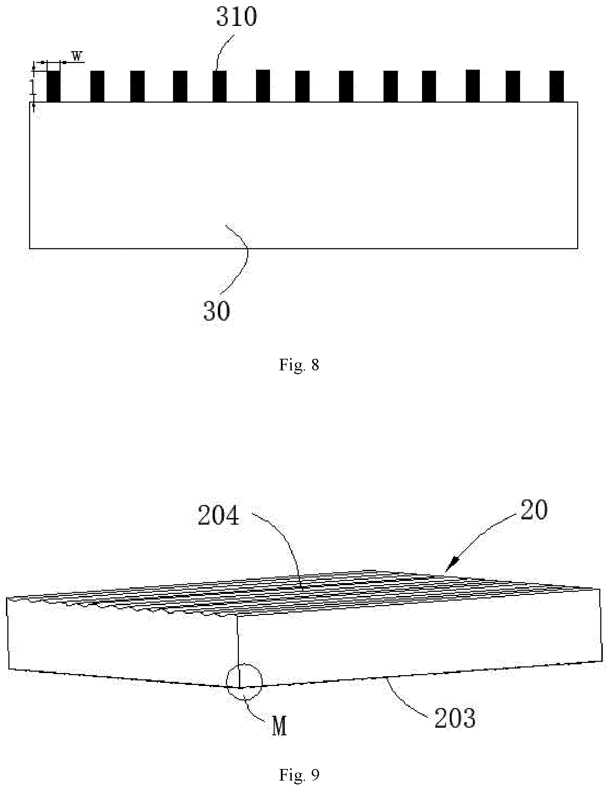

In Embodiment 1, to enhance the brightness of light output from the first light guide plate 20, structural improvements are made to the second backlight device 2 in Embodiment 1, as manifested below: ① Referring to Fig. 9 to Fig.15, the light guide surface B 201 is provided with a plurality of mutually independent optical elements 203. Each of the plurality of optical elements 203 is in an irregular quadrangular pyramid shape, wherein each of the plurality of optical elements 203 has a light-refracting inclined surface 2030, an auxiliary surface A2031 and two auxiliary surfaces B2032, each of which adjoins the light-refracting inclined surface 2030 along a shared edge. The light-refracting inclined surface 2030 is arranged opposite to the second light source 21 and is further inclined relative to the light guide surface B 201. At least one edge of the light-refracting inclined surface 2030 is a ridge line extending along an arc. The use of the light-refracting inclined surface and the arc-shaped ridge line can maximize a light-receiving area of the light-refracting inclined surface, thereby well improving the brightness of the light output from the first light guide plate 20. ② Referring to Fig. 9, Fig.10, and Fig. 16, a lens unit is provided on the light-emitting surface B 202. The lens unit is composed of a plurality of first prism strips 204, and the plurality of first prism strips 204 are all elongated structures extending along the second direction. A cross-section of each of the plurality of first prism strips 204 in the first direction is arc-shaped. Further, the plurality of first prism strips 204 are arranged side by side along the third direction. The use of the lens unit can improve a light utilization rate of the first light guide plate, thereby increasing the brightness of the light output from the first light guide plate 20.

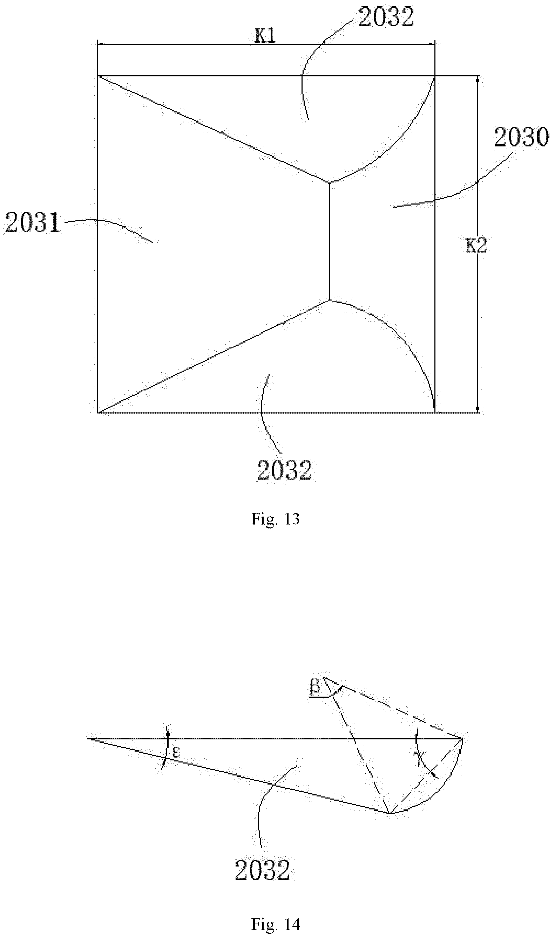

Further preferably, in each of the plurality of optical elements 203, referring to Fig. 13, the light-refracting inclined surface 2030 is trapezoidal, and two legs of the light-refracting inclined surface 2030 are arcuate and mirror-symmetrically arranged. A top base and a bottom base of the light-refracting inclined surface 2030 are both straight. The auxiliary surface A2031 is an isosceles trapezoid, with a top base, a bottom base, and two non-parallel sides being all straight. The top base of the auxiliary surface A2031 is connected with the top base of the light-refracting inclined surface 2030 along a shared edge. The two auxiliary surfaces B2032 are both triangular. First edges of the two auxiliary surfaces B2032 are correspondingly connected with the two legs of the light-refracting inclined surface 2030 along shared edges. Second edges of the two auxiliary surfaces B2032 are correspondingly connected with the two non-parallel sides of the auxiliary surface A2031 along shared edges. Third edges of the two auxiliary surfaces B2032, the bottom base of the light-refracting inclined surface 2030, and the bottom base of the auxiliary surface A2031 are all attached and fixedly connected to the light guide surface B 201.

Additionally, in each of the plurality of optical elements 203, referring to Fig. 13 to Fig. 15, lengths of the third edges of the two auxiliary surfaces B2032, the bottom base of the light-refracting inclined surface 2030, and the bottom base of the auxiliary surface A2031 are all 0.03 mm to 0.1 mm (i.e., values of K1 and K2 in Fig. 13 are both 0.03 mm to 0.1 mm, and the values of K1 and K2 may be equal or unequal). Central angles β corresponding to the two legs of the light-refracting inclined surface 2030 are 20° to 60°. Included angles γ between chords corresponding to the two legs of the light-refracting inclined surface 2030 and the third edges of the two auxiliary surfaces B2032 are 25° to 45°. Included angles δ between the two non-parallel sides of the auxiliary surface A2031 and the bottom base are 30°to 80°. Included angles ε between the second edges and the corresponding third edges of the two auxiliary surfaces B2032 are 10° to 30°.

More preferably, each of the plurality of optical elements 203 is correspondingly projected onto the light-shielding portion 31.

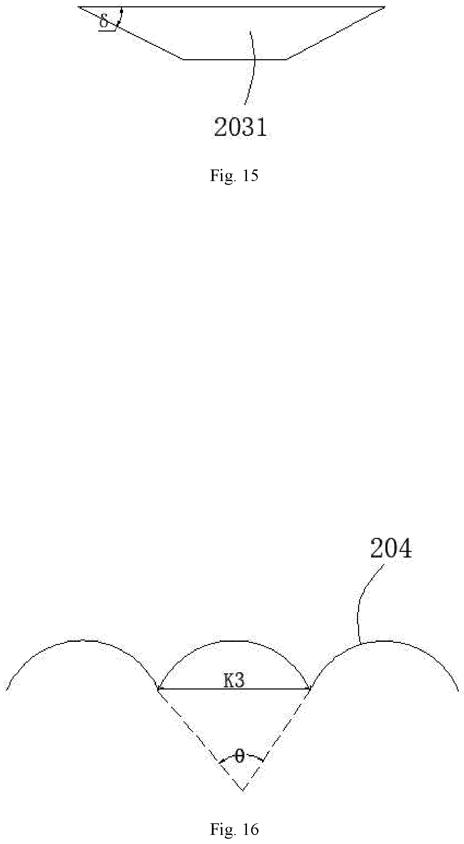

Further, for the lens unit on the light-emitting surface B 202, referring to Fig. 16, among the plurality of first prism strips 204, a chord length K3 of each arcuate cross-section is 0.03 mm to 0.06 mm, and a corresponding central angle θ is 40° to 100°.

Further, in Embodiment 1, there are no special limitation requirements for the material selection of the first light guide plate 20 and the second light source 21. For example, the first light guide plate 20 may preferably be made of any one of polycarbonate, acrylic, or cyclo olefin copolymer (COC), and the second light source 21 is preferably a light-emitting diode (LED).

Then, the specific structure of the first backlight device 1 is described in detail.

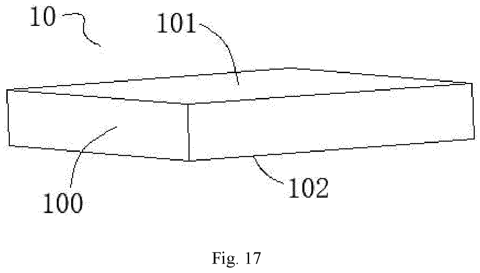

The substrate 10 in Embodiment 1 is a light guide plate (referring to Fig. 17 for the specific structure), indicating that the first backlight device 1 preferably adopts an edge-lit backlight structure. As can be seen from Fig. 17, the light-incident surface A 100 is adjacent to the light-emitting surface A 101, and the substrate 10 further has a light guide surface A102, which is adjacent to the light-incident surface A 100 and is arranged back-to-back with the light-emitting surface A 101.

Based on the structure of the above-mentioned second backlight device 2, a layout relationship between the substrate 10 and the first light guide plate 20 is as below: the light-incident surface A 100 is perpendicular to the light-incident surface B 200, and the light guide surface A102, the light-emitting surface A 101, the light guide surface B 201, and the light-emitting surface B 202 are arranged in parallel in the first direction.

Further preferably, in Embodiment 1, there are no special limitation requirements for the material selection of the substrate 10 and the first light source 11. Specifically, the substrate 10 may preferably be made of polycarbonate, acrylic, or cyclo olefin copolymer (COC), and the first light source 11 may preferably be an LED.

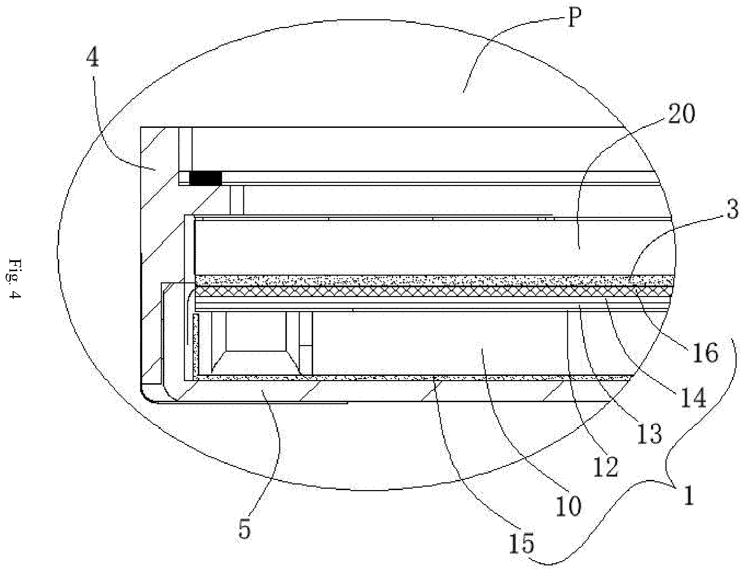

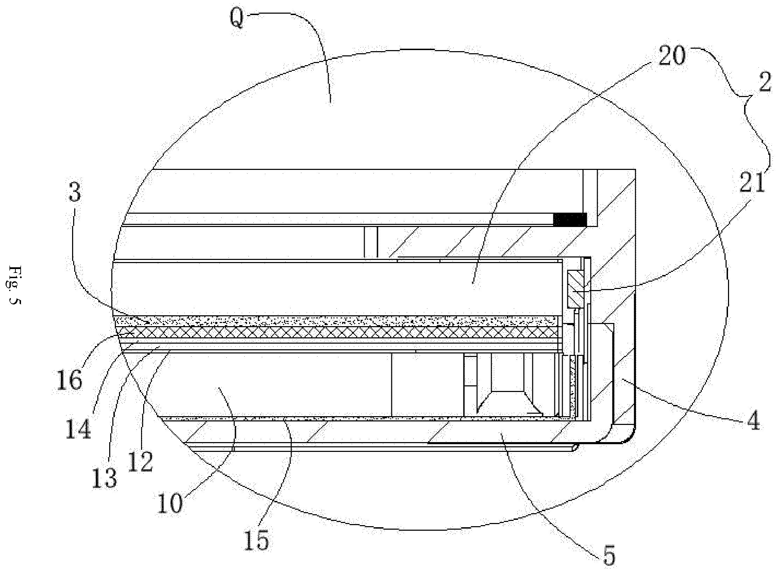

Additionally, in Embodiment 1, the specific structure of the composite brightness enhancement film is as below: referring to Fig. 4 and Fig. 5, the composite brightness enhancement film includes a diffusion film 12, a first prism film 13, and a second prism film 14, which are sequentially stacked in the first direction. One side of the diffusion film 12 facing away from the first prism film 13 is fixedly arranged on the light-emitting surface A 101. The first prism film 13 is provided with a plurality of second prism strips, and the second prism film 14 is provided with a plurality of third prism strips. The plurality of second prism strips all extend lengthwise along the second direction, and are arranged side by side along the third direction. The plurality of third prism strips all extend lengthwise along the third direction, and are arranged side by side along the second direction. Additionally, the plurality of second prism strips and the plurality of third prism strips are oppositely arranged.

Further preferably, for the diffusion film 12, there are no limitation requirements on the material selection in the present invention, as long as the material can diffuse light. For example, the transparent PET material may be used. Similarly, for the first prism film 13 and the second prism film 14, there are no limitation requirements in the present invention, as long as the light can be collimated and brightened. For example, a brightness enhancement film (BEF) prism film produced by the 3M Company may be used. Additionally, the present invention employs an adhesive method to fixedly connect the light-emitting surface A 101, the diffusion film 12, the first prism film 13, and the second prism film 14 in sequence.

Further preferably, in Embodiment 1, the first backlight device 1 also includes a reflective film 15 and a polarizer 16. The reflective film 15 is fixedly arranged on the light guide surface A102, and there are no limitation requirements for the material selection of the reflective film 15 in the present invention. For example, a white PET material with a reflectivity of 90% or above may be preferably used. The polarizer 16 is fixedly arranged on a light-emitting side of the composite brightness enhancement film (a side of the composite brightness enhancement film facing away from the light-emitting surface A 101 is the light-emitting side of the composite brightness enhancement film). The polarizer 16 can improve the light utilization rate and also brighten the light. Correspondingly, the privacy film 3 is arranged between the side of the polarizer 16 facing away the composite brightness enhancement film and the light guide surface B 201. Specifically, based on the specific structure of the composite brightness enhancement film, the polarizer 16 is fixedly arranged on one side of the second prism film 14 facing away from the first prism film 13 through the adhesive method.

Additionally, at least one of the light-emitting surface A 101 and the light guide surface A102 is further provided with a light guide microstructure for improving light brightness. The light guide microstructure includes a plurality of array-arranged spherical protrusions (or referred to as mesh dots). A diameter of the spherical protrusions may be preferably 10µ to 100µ.

Finally, in the backlight device structure of Embodiment 1, besides the first backlight device 1, the second backlight device 2, and the privacy film 3 described above, the backlight device also includes an outer frame 4 and a sheet metal member 5. The outer frame 4 and the sheet metal member 5 are combined to install and fix the first backlight device 1, the second backlight device 2, and the privacy film 3. This belongs to conventional technical means, which will not be excessively detailed herein.

### Embodiment 2:

Embodiment 2 also provides a backlight device. Compared to Embodiment 1, a main difference in Embodiment 2 lies in: a specific structure of the privacy film 3 is different from that in Embodiment 1.

In Embodiment 2, the privacy film 3 also includes the light-transmitting portion 30 made of the light-transmitting material and the light-shielding portion 31 made of the light-shielding material. However, different from Embodiment 1 where the plurality of light-shielding strips 310 are arranged in the light-transmitting portion 30, in Embodiment 2, the plurality of light-shielding strips 310 are selectively arranged on the front side or the rear side of the light-transmitting portion 30.

Further preferably, referring to Fig. 8, in Embodiment 2, the light-transmitting portion 30 has a thickness H1 of 0.2 mm to 0.5 mm in the first direction; the plurality of light-shielding strips 310 are arranged on the rear side of the light-transmitting portion 30, and a cross-section of each of the plurality of light-shielding strips 310 in the first direction is a rectangle. Wherein each rectangular cross-section has a width dimension w of 0.03 mm to 0.05 mm and a length dimension 1 of 0.1 mm to 0.15 mm. Or a cross-section of each of the plurality of light-shielding strips 310 in the first direction is an isosceles triangle, wherein each isosceles triangle cross-section has a base length of 0.03 mm to 0.05 mm, a height of 0.1 mm to 0.15 mm, and an apex angle of 1° to 20°. A spacing between adjacent ones of the light-shielding strips 310 is 0.04 mm to 0.095 mm (the spacing is further explained that when the cross sections of the light-shielding strips 310 in the first direction are the rectangles, the spacing refers to a spacing between the two adjacent light-shielding strips 310; and when the cross sections of the light-shielding strips 310 in the first direction are the isosceles triangles, the spacing refers to a spacing between bases of the isosceles triangle cross sections of the two adjacent light-shielding strips 310).

From the above, it can be inferred that in a structure of the privacy film 3 described in Embodiment 2, the plurality of light-shielding strips 310 are all arranged outside the light-transmitting portion 30, and two ends of each light-shielding strip 310 in the length direction are flush with two sides of the light-transmitting portion 30 in the second direction respectively. Additionally, the privacy film 3 is fixedly arranged between the light-emitting side of the composite brightness enhancement film and the light guide surface B 201 through the light-transmitting portion 30 and the light-shielding portion 31.

It should be noted that in Embodiment 2, except for the privacy film 3, the first backlight device 1 and the second backlight device 2 may adopt the same structures as those in Embodiment 1, which will not be detailed herein.

### Embodiment 3:

Embodiment 3 provides a display device, which mainly includes a display panel and a backlight device. The backlight device may adopt the backlight device structure shown in Embodiment 1 or Embodiment 2, and the display panel is provided on the backlight device.

In summary, the backlight device provided in the present invention may be applied to the display device, can provide both the privacy operating state and the sharing operating state for the display device, has a good privacy protection effect, and is beneficial for protecting user privacy. Additionally, the backlight device is novel and reasonable in structure, easy to manufacture, and low in manufacture costs, thereby facilitating machining and production implementing.

In the foregoing description, numerous specific details are set forth to provide a thorough understanding of the present invention. However, the foregoing description is merely a preferred embodiment of the present invention. The present invention can be implemented in many other ways different from those described herein. Therefore, the present invention is not limited by the specific implementations disclosed above. Meanwhile, without departing from the scope of the technical solution of the present invention, any person skilled in the art may utilize the methods and technical content disclosed above to make many possible modifications and refinements to the technical solution of the present invention, or modify the technical solution into equivalent embodiments. Any simple modification, equivalent change, or refinement made to the above embodiments based on the technical essence of the present invention without departing from the content of the technical solution of the present invention shall still fall within the scope of protection of the technical solution of the present invention.

## Claims

1. A backlight device, comprising: a first backlight device (1), a second backlight device (2) and a privacy film (3), wherein
the first backlight device (1) comprises a substrate (10), a first light source (11) and a composite brightness enhancement film, the substrate (10) is made of a light-transmitting material and has a light-incident surface A (100) and a light-emitting surface A (101), the first light source (11) is arranged adjacent to the light-incident surface A (100), and the composite brightness enhancement film is provided on the light-emitting surface A (101) and is configured to diffuse and collimate light;
the second backlight device (2) comprises a first light guide plate (20) and a second light source (21), the first light guide plate (20) has a light-incident surface B (200), and a light guide surface B (201) and a light-emitting surface B (202) which are disposed back-to-back and both adjacent to the light-incident surface B (200), and the second light source (21) is arranged adjacent to the light-incident surface B (200); and
the privacy film (3) is arranged between a light-emitting side of the composite brightness enhancement film and the light guide surface B (201), and the privacy film (3) is configured to cooperate with the first backlight device (1) and the second backlight device (2) to provide the backlight device with a privacy operating state and a sharing operating state.

2. The backlight device according to claim 1, **characterized in that**: when the first light source (11) is turned on and the second light source (21) is turned off, light emitted from the first light source (11) sequentially passes through the substrate (10), the composite brightness enhancement film, the privacy film (3), and the first light guide plate (20) and then is emitted in a forward direction, to achieve the privacy operating state of the backlight device; and
when both the first light source (11) and the second light source (21) are turned on, the light emitted from the first light source (11) sequentially passes through the substrate (10), the composite brightness enhancement film, the privacy film (3), and the first light guide plate (20) and then is emitted in the forward direction, and light emitted from the second light source (21) passes through the first light guide plate (20) and then is emitted in a dispersed manner, to achieve the sharing operating state of the backlight device.

3. The backlight device according to claim 2, **characterized in that**: the substrate (10), the composite brightness enhancement film, the privacy film (3), and the first light guide plate (20) are sequentially stacked along a first direction; and
the privacy film (3) comprises a light-transmitting portion (30) made of a light-transmitting material and a light-shielding portion (31) made of a light-shielding material, the light-shielding portion (31) is provided on the light-transmitting portion (30), and the light-shielding portion (31) cooperates with the light-transmitting portion (30) to collimate light passing through the privacy film (3) in the first direction.

4. The backlight device according to claim 3, **characterized in that**: the light-transmitting portion (30) is plate-shaped; the light-shielding portion (31) is composed of a plurality of light-shielding strips (310), the plurality of light-shielding strips (310) are all elongated structures having a thickness direction arranged along the first direction and a length direction arranged along a second direction perpendicular to the first direction, and the plurality of light-shielding strips (310) are arranged side by side along a third direction, and the third direction is perpendicular to both the first direction and the second direction; and
further, defining a side of the light-transmitting portion (30) facing the composite brightness enhancement film as a front side, and defining a side of the light-transmitting portion (30) facing the first light guide plate (20) as a rear side; and the plurality of light-shielding strips (310) are embedded in one selected from the front side and the rear side of the light-transmitting portion (30), or the plurality of light-shielding strips (310) are arranged on one selected from the front side and the rear side of the light-transmitting portion (30).

5. The backlight device according to claim 4, **characterized in that**: the light-transmitting portion (30) has a thickness of 0.2 mm to 0.5 mm in the first direction; and
the plurality of light-shielding strips (310) are embedded in the front side of the light-transmitting portion (30), a cross-section of each of the plurality of light-shielding strips (310) in the first direction is an isosceles triangle, and each isosceles triangle cross-section has a base length of 0.03 mm to 0.05 mm, a height of 0.1 mm to 0.15 mm, and an apex angle of 1° to 20°; and a spacing between adjacent ones of the light-shielding strips (310) is 0.04 mm to 0.095 mm.

6. The backlight device according to claim 4, **characterized in that**: the light-transmitting portion (30) has a thickness of 0.2 mm to 0.5 mm in the first direction; and
the plurality of light-shielding strips (310) are arranged on the rear side of the light-transmitting portion (30), a cross-section of each of the plurality of light-shielding strips (310) in the first direction is a rectangle, wherein each rectangular cross-section has a width dimension of 0.03 mm to 0.05 mm and a length dimension of 0.1 mm to 0.15 mm; or a cross-section of each of the plurality of light-shielding strips (310) in the first direction is an isosceles triangle, wherein each isosceles triangle cross-section has a base length of 0.03 mm to 0.05 mm, a height of 0.1 mm to 0.15 mm, and an apex angle of 1° to 20°; and a spacing between adjacent ones of the light-shielding strips (310) is 0.04 mm to 0.095 mm.

7. The backlight device according to claim 4, **characterized in that**: the light guide surface B (201) is provided with a plurality of mutually independent optical elements (203), each of the plurality of optical elements (203) is in an irregular quadrangular pyramid shape, wherein each of the plurality of optical elements (203) has a light-refracting inclined surface (2030), an auxiliary surface A (2031) and two auxiliary surfaces B (2032), each of which adjoins the light-refracting inclined surface (2030) along a shared edge, wherein the light-refracting inclined surface (2030) is arranged opposite to the second light source (21) and is further inclined relative to the light guide surface B (201), and at least one edge of the light-refracting inclined surface (2030) is a ridge line extending along an arc; and
a lens unit is provided on the light-emitting surface B (202), the lens unit is composed of a plurality of first prism strips (204), the plurality of first prism strips (204) are all elongated structures extending along the second direction, a cross-section of each of the plurality of first prism strips (204) in the first direction is arc-shaped, and the plurality of first prism strips (204) are arranged side by side along the third direction.

8. The backlight device according to claim 7, **characterized in that**: in each of the plurality of optical elements (203), the light-refracting inclined surface (2030) is trapezoidal, two legs of the light-refracting inclined surface (2030) are arcuate and mirror-symmetrically arranged, and a top base and a bottom base of the light-refracting inclined surface (2030) are both straight; the auxiliary surface A (2031) is an isosceles trapezoid, with a top base, a bottom base, and two non-parallel sides being all straight, and the top base of the auxiliary surface A (2031) is connected with the top base of the light-refracting inclined surface (2030) along a shared edge; and the two auxiliary surfaces B (2032) are both triangular, first edges of the two auxiliary surfaces B (2032) are correspondingly connected with the two legs of the light-refracting inclined surface (2030) along shared edges, second edges of the two auxiliary surfaces B (2032) are correspondingly connected with the two non-parallel sides of the auxiliary surface A (2031) along shared edges, and third edges of the two auxiliary surfaces B (2032), the bottom base of the light-refracting inclined surface (2030), and the bottom base of the auxiliary surface A (2031) are all attached and fixedly connected to the light guide surface B (201);
further, in each of the plurality of optical elements (203), lengths of the third edges of the two auxiliary surfaces B (2032), the bottom base of the light-refracting inclined surface (2030), and the bottom base of the auxiliary surface A (2031) are all 0.03 mm to 0.1 mm; central angles corresponding to the two legs of the light-refracting inclined surface (2030) are 20° to 60°; included angles between chords corresponding to the two legs of the light-refracting inclined surface (2030) and the third edges of the two auxiliary surfaces B (2032) are 25° to 45°; included angles between the two non-parallel sides of the auxiliary surface A (2031) and the bottom base are 30° to 80°; and included angles between the second edges and the corresponding third edges of the two auxiliary surfaces B (2032) are 10° to 30°; and
further, among the plurality of first prism strips (204), a chord length of each arcuate cross-section is 0.03 mm to 0.06 mm, and a corresponding central angle is 40°to 100°.

9. The backlight device according to claim 7, **characterized in that**: each of the plurality of optical elements (203) is correspondingly projected onto the light-shielding portion (31).

10. The backlight device according to claim 4, **characterized in that**: the substrate (10) is a light guide plate; and correspondingly, the light-incident surface A (100) is adjacent to the light-emitting surface A (101), and the substrate (10) further has a light guide surface A (102) which is adjacent to the light-incident surface A (100) and is arranged back-to-back with the light-emitting surface A (101); and
further, the light-incident surface A (100) is perpendicular to the light-incident surface B (200), and the light guide surface A (102), the light-emitting surface A (101), the light guide surface B (201), and the light-emitting surface B (202) are arranged in parallel in the first direction.

11. The backlight device according to claim 10, **characterized in that**: the composite brightness enhancement film comprises a diffusion film (12), a first prism film (13), and a second prism film (14), which are sequentially stacked in the first direction, one side of the diffusion film (12) facing away from the first prism film (13) is fixedly arranged on the light-emitting surface A (101), the first prism film (13) is provided with a plurality of second prism strips, the second prism film (14) is provided with a plurality of third prism strips, and the plurality of second prism strips all extend lengthwise along the second direction, and are arranged side by side along the third direction; the plurality of third prism strips all extend lengthwise along the third direction, and are arranged side by side along the second direction; and the plurality of second prism strips and the plurality of third prism strips are oppositely arranged.

12. The backlight device according to claim 10, **characterized in that**: a side of the composite brightness enhancement film facing away from the light-emitting surface A (101) is a light-emitting side of the composite brightness enhancement film;
the first backlight device (1) further comprises a reflective film (15) and a polarizer (16), the reflective film (15) is fixedly arranged on the light guide surface A (102), the polarizer (16) is fixedly arranged on a light-emitting side of the composite brightness enhancement film, and correspondingly, the privacy film (3) is arranged between the side of the polarizer (16) facing away the composite brightness enhancement film and the light guide surface B (201); and
further, at least one of the light-emitting surface A (101) and the light guide surface A (102) is further provided with a light guide microstructure, and the light guide microstructure comprises a plurality of array-arranged spherical protrusions.

13. A display device, comprising a display panel and the backlight device according to any one of claims 1 to 12, wherein the display panel is provided on the backlight device.
